# EUROPEAN PATENT SPECIFICATION

(11) **EP 2 854 433 B1**
(45) Date of publication and mention of the grant of the patent: **31.10.2018**
(21) Application number: 13793480.8
(22) Date of filing: 18.04.2013
(51) Int. Cl.: H04W 12/06, H04L 29/06

(54) **METHOD, SYSTEM AND RELATED DEVICE FOR REALIZING VIRTUAL SIM CARD**
VERFAHREN, SYSTEM UND ENTSPRECHENDE VORRICHTUNG ZUR AUSFÜHRUNG EINER VIRTUELLEN SIM-KARTE
PROCÉDÉ, SYSTÈME ET DISPOSITIF ASSOCIÉ DESTINÉS À RÉALISER UNE CARTE SIM VIRTUELLE

(30) Priority: 22.05.2012 CN 201210159453
(43) Date of publication of application: 01.04.2015
(73) Proprietor: ZTE Corporation, Shenzhen, Guangdong 518057 (CN)
(72) Inventor: AN, Lu, Shenzhen, Guangdong 518057 (CN); XU, Minyao, Shenzhen, Guangdong 518057 (CN); LAI, Min, Shenzhen, Guangdong 518057 (CN)
(74) Representative: Chimini, Francesco
(86) International application number: PCT/CN2013/074373
(87) International publication number: WO 2013/174185

(56) References cited:
- WO-A1-2010/069962
- CN-A- 102 118 447
- CN-A- 102 307 349
- CN-A- 102 571 792
- CN-A- 102 752 269
- US-A1- 2004 233 893
- US-A1- 2007 005 964
- US-A1- 2011 269 423

## Description

### Technical Field

The present invention relates to the field of communications, and in particular to a method, system and relevant device for realizing a virtual SIM card. Background

There are two kinds of mobile terminals using a Subscriber Identity Module (SIM) card in the market. One is a machine-card-integrated type, the other is a machine-card-separated type.

For the mobile terminal of the machine-card-separated type, an authentication component is saved in the SIM card. When the mobile terminal performs network access or uses telecommunication services, the authentication component identifies the user identity with operator's network through the key and algorithm in the SIM card to complete the voice and data services. The SIM card is installed within a separate card slot designed in the mobile terminal, and connected with the card slot in the mobile terminal via a mechanical connector. Again, the SIM card is specially made for different operators and can be also designed and manufactured by different manufacturers.

The above technical scheme has many defects, which are specifically described as follows.

The SIM card slot is designed in the mobile terminal, which increases the cost and thickens the mobile terminal. For the requirements that the high-end models pursuit light and thin appearance, it will inevitably result in serious defects.

The mechanical connector connecting the SIM card and the card slot also results in the possible damage of the card slot, which brings unnecessary losses to the user.

A huge amount of subscriber information is saved in the SIM card. Since a lot of manufacturers are capable of producing SIM cards, it is possible to give criminals a chance to copy the SIM cards, which causes losses to the users.

If a user wants to purchase a SIM card after purchasing a mobile terminal, he/she needs to firstly determine that he/she plans to select which operator for accessing the network, and then purchase the SIM card at the service centre designated by this operator. But it is impossible for the user to take the mobile terminal home and access the network by selecting an operator on the Internet after purchasing the mobile terminal. If the user wants to change the number, he/she must repurchase a new SIM card, which is not only a troublesome thing for the user, but also wastes the resources. US 2007/005964 A1 discloses methods and apparatus for authenticating a remote service to another service on behalf of a user.

### Summary

The present invention is defined by the appended claims. In view of the analysis above, the embodiments of the present invention provide a method, system and relevant device for realizing a virtual SIM card, which overcomes many defects brought by a physical SIM card in the existing mobile terminal of a machine-card-separated type.

An embodiment of the present invention provides a method for realizing a virtual SIM card, including steps of:
when a mobile terminal requests to access a communication network, connecting to a cloud service terminal through a wireless network;
after the mobile terminal receives an authentication request sent by the communication network, requesting the cloud service terminal to perform authentication calculation and feeding an authentication result obtained by the authentication calculation back to the mobile terminal; and sending, by the mobile terminal, the received authentication result to the communication network.

Preferably, the above method further includes that:
the communication network performs authentication according to the authentication result received from the mobile terminal, wherein if the authentication is passed, the mobile terminal access is allowed, otherwise, accessing the communication network is not allowed.

Preferably, connecting to the cloud service terminal through the wireless network includes that:
the cloud service terminal verifies the validity of the mobile terminal, wherein if the verification is passed, a normal connection is performed, otherwise, accessing the cloud service terminal is not allowed.

Preferably, the validity verification includes that:
when the mobile terminal sends a new value obtained by calculating a preset user name and a preset password that are used during connecting the cloud service terminal according to a predefined algorithm to the cloud service terminal through the wireless network, the cloud service terminal decrypts the received new value adopting the same predefined algorithm, and compares the user name and the password decrypted with the user name and the password prestored by the cloud service terminal corresponding to the mobile terminal, wherein if the comparison result is that the user name and the password decrypted are the same as the user name and the password prestored, the verification is passed.

Preferably, when the authentication request sent by the communication network contains a random number, the cloud service terminal performs the authentication calculation includes that:
the mobile terminal sends the random number to the cloud service terminal, the cloud service terminal obtains a corresponding response number by calculating the random number by an algorithm and a key prestored for authentication, and feeds the response number back to the mobile terminal.

Preferably, the communication network performs authentication includes that:
when the mobile terminal sends the response number to the communication network, the communication network compares the received response number with the prestored response number, wherein if the comparison result is the received response number is the same as the prestored response number, the authentication is passed, otherwise, access is not allowed; wherein the prestored response number corresponds to the random number in the authentication request.

The present invention further provides a system for realizing a virtual SIM card, including: a mobile terminal and a cloud service terminal, wherein the mobile terminal includes: a cloud interface component and a sending component, wherein
the cloud interface component is configured to, when accessing a communication network is requested, connect to the cloud service terminal through a wireless network, and after an authentication request sent by the communication network is received, request the cloud service terminal to perform authentication calculation;
the cloud service terminal is configured to perform authentication calculation and feed an authentication result obtained by the authentication calculation back to the mobile terminal; and
the sending component is configured to send the authentication result received by the mobile terminal to the communication network.

Preferably, the system further includes an authentication component in the communication network, configured to perform authentication according to the authentication result received from the mobile terminal, wherein if the authentication is passed, the mobile terminal access is allowed, otherwise, the mobile terminal is not allowed to access the communication network.

The present invention further provides a mobile terminal, including:
a cloud interface component, configured to, when accessing a communication network is requested, connect to a cloud service terminal through a wireless network, and after an authentication request sent by the communication network is received, request the cloud service terminal to perform authentication calculation and feed back an authentication result; and
a sending component, configured to send the authentication result received from the cloud service terminal by the mobile terminal to the communication network.

Preferably, when the cloud service terminal verifies the validity of the mobile terminal, the sending component is further configured to obtain a new value by calculating a preset user name and a preset password that are used when the mobile terminal connects to the cloud service terminal according to a predefined algorithm, and send the new value to the cloud service terminal through the wireless network.

Another embodiment of the present invention provides a cloud service terminal, including:
an authentication calculation component, configured to perform authentication calculation according to a request of a mobile terminal; and
a sending component, configured to feed the calculated authentication result back to the mobile terminal.

In the described embodiment, the cloud service terminal further includes:
a verification component, configured to verify the validity of the mobile terminal, wherein if the verification is passed, a normal connection is performed, otherwise, the mobile terminal is not allowed to access the cloud service terminal.

Preferably, the verification component is further configured to, when the cloud service terminal receives a new value obtained by calculating a preset user name and a preset password that are used during connecting to the cloud service terminal according to a predefined algorithm by the mobile terminal, decrypt the received new value adopting the same predefined algorithm, and compare the user name and the password decrypted with the user name and the password prestored by the cloud service terminal corresponding to the mobile terminal, if the comparison result is that the user name and the password decrypted are the same as the user name and the password prestored, the verification is passed.

The solution of the embodiments of the present invention has the following beneficial effects:
The solution realizes a mobile terminal with a virtual SIM through a cloud service, and on the basis of inheriting the security of a physical SIM card, not only are the production and mounting costs of a SIM card slot reduced, but also the mobile terminal is allowed to be lighter, thinner and more portable.

Other features and advantages of the present invention will be set forth in the following description and partly may be obvious from the description, or may be understood by implementing the present invention. The objects and other advantages of the present invention can be realized and obtained through the structures indicated by the description, claims and drawings.

### Brief Description of the Drawings

Fig. 1 is a flow diagram of a method according to an embodiment of the present invention;
Fig. 2 is a structure diagram of a system according to an embodiment of the present invention;
Fig. 3 is a structure diagram of a mobile terminal according to an embodiment of the present invention; and
Fig. 4 is a structure diagram of a cloud service terminal according to an embodiment of the present invention.

### Detailed Description of the Embodiments

The example embodiments of the present invention are described in detail below in conjunction with accompanying drawings, wherein the accompanying drawings constitute a portion of the application and is used to illustrate the principle of the present invention together with the embodiments of the present invention. In order to clarify and simplify the embodiments, when the theme of the present invention may be incurred to be indefinable, the detailed and specific illustration of the known functions and structures in the devices described in the specification will be omitted.

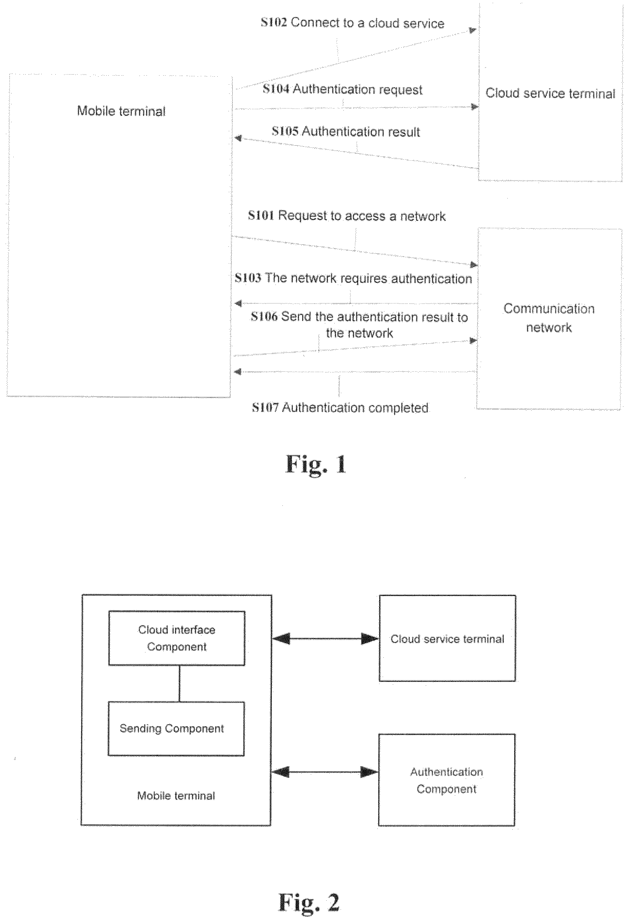

Firstly, a method according to an embodiment of the present invention is illustrated in detail in conjunction with Fig. 1.

As shown in Fig. 1, Fig. 1 is a flow diagram of a method according to an embodiment of the present invention, including the following steps:
Step 101: When a mobile terminal initiates a service, including the mobile terminal switching on, registering, call establishment attempt, position updating and activating, deactivating, registering or deleting supplementary services or the like, accessing a communication network is requested.
Step 102: The mobile terminal connects to a cloud service terminal through a wireless network. In an example embodiment, after an algorithm is designed in the mobile terminal in advance, a new value is obtained by calculating a user name and a password of the mobile terminal by the predefined algorithm, the cloud service terminal is connected through the wireless network while the new value obtained by calculating is accompanied. In the cloud service terminal, the new value is decrypted by the same predefined algorithm to check whether the identity of the mobile terminal is a valid user. That is, the user name and the password decrypted are compared with the user name and the password prestored by the cloud service terminal corresponding to the mobile terminal, if the comparison result is that the user name and the password obtained by decryption are the same as the user name and the password which are prestored, a normal connection is performed, otherwise, the mobile terminal is not allowed to access.
Step 103: After the mobile terminal initiates an access request to the communication terminal, the communication network sends a random number to the mobile terminal through a control channel.
Step 104: The mobile terminal sends an authentication request to the cloud service terminal. In an example embodiment, since the mobile terminal has been connected to the cloud service terminal at Step 102, at this step, the mobile terminal may send the random number received from the communication network to the cloud service terminal. After receiving the random number, the cloud service terminal obtains a response number through calculating the random number according to an algorithm and a key prestored for authentication.
Step 105: The cloud service terminal sends the authentication result to the mobile terminal. That is, the cloud service terminal sends the response number obtained by calculating to the mobile terminal.
Step 106: The mobile terminal sends the authentication result to the network. That is, the mobile terminal sends the response number fed back by the cloud service terminal to the communication network.
Step 107: The communication network compares the received response number with the response number prestored (the response number corresponding to the random number in the authentication request previously sent). If the comparison result is that the received response number and the response number prestored are the same, the mobile terminal is allowed to access, otherwise the mobile terminal is an invalid user and the communication network refuses to serve the mobile terminal. This is because the random number sent to the mobile terminal by the wireless network and the random number actually received by the mobile terminal should be the same, and the same key and the same algorithm are used, so that the response numbers should be the same.

Next, a system according to an embodiment of the present invention is illustrated in detail in conjunction with Fig. 2.

As shown in Fig. 2, Fig. 2 is a structure diagram of a system according to an embodiment of the present invention, including:
a mobile terminal and a cloud service terminal, wherein the mobile terminal comprises: a cloud interface component and a sending component, wherein
the cloud interface component is configured to, when accessing a communication network is requested, connect to a cloud service terminal through a wireless network, and after an authentication request sent by the communication network is received, request the cloud service terminal to perform authentication calculation;
the cloud service terminal is configured to perform authentication calculation and feed an authentication result obtained by the authentication calculation back to the mobile terminal; and
the sending component is configured to send the authentication result received by the mobile terminal to the communication network.

As a example embodiment of the present invention, the system may also comprise an authentication component configured in the communication network, configured to perform authentication according to the authentication result received from the mobile terminal, wherein if the authentication is passed, the mobile terminal access is allowed, otherwise, the mobile terminal is not allowed to access the communication network.

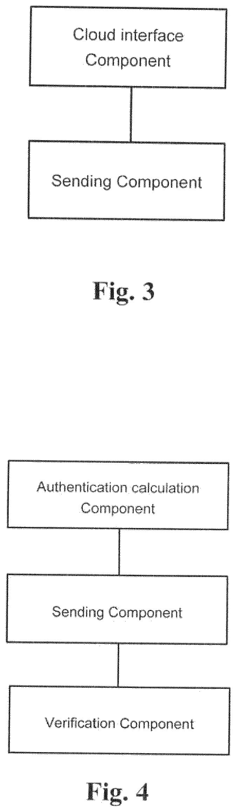

The specific implementation of the mobile terminal and the cloud service terminal will be illustrated in detail below in conjunction with Fig. 3 and Fig. 4.

As shown in Fig. 3, Fig. 3 is a structure diagram of a mobile terminal according to an embodiment of the present invention, including:
a cloud interface component, configured to, when accessing a communication network is requested, connect to a cloud service terminal through a wireless network, and after an authentication request sent by the communication network is received, request the cloud service terminal to perform authentication calculation and feed back an authentication result; and
a sending component, configured to send the authentication result to the communication network, and the authentication result is that the mobile terminal receives from the cloud service terminal.

When the cloud service terminal verifies the validity of the mobile terminal, the sending component also needs to obtain a new value by calculating a preset user name and a preset password that are used when the mobile terminal connects to the cloud service terminal according to a predefined algorithm, and send the new value to the cloud service terminal through the wireless network.

As shown in Fig. 4, Fig. 4 is a structure diagram of a cloud service terminal according to an embodiment of the present invention, including:
an authentication calculation component, configured to perform authentication calculation according to a request of a mobile terminal; and
a sending component, configured to feed the authentication result obtained by calculating back to the mobile terminal.

As an example embodiment of the present invention, the cloud service terminal further includes:
a verification component, configured to verify the validity of the mobile terminal, wherein if the verification is passed, a normal connection is performed, otherwise, the mobile terminal is not allowed to access the cloud service terminal. Specifically, when the cloud service terminal receives a new value obtained by calculating a preset user name and a preset password that are used when the mobile terminal connects the cloud service terminal according to a predefined algorithm, the verification component decrypts the new received value adopting the same predefined algorithm, and compares the user name and the password which are decrypted with the user name and the password which are prestored by the cloud service terminal corresponding to the mobile terminal, wherein if the comparison result is that the user name and the password which are decrypted are the same as the user name and the password which are prestored, the verification is passed.

To sum up, the embodiments of the present invention provide a method, system and relevant device for realizing a virtual SIM card. A mobile terminal realizing the virtual SIM through cloud service has the following characteristics:
1. The mobile terminal is a thin terminal. No SIM card slot is designed, and no SIM card is inserted. In this way, since no SIM card slot is designed in the mobile terminal, the cost is reduced, and lots of obstacles are reduced for designing a lighter and thinner mobile terminal. Moreover, the user himself can select an operator to access the network through the Internet instead of purchasing a SIM card at the service centre of the operator.
2. The authentication component is saved in the cloud service terminal and the authentication operation is performed in the cloud service terminal. That is, when the voice or data services are performed, after the services are initiated, the cloud service terminal is firstly connected by a user name and a password through a wireless network. When the user name and the password are sent to the cloud service terminal, an encryption algorithm is adopted to ensure the security of users. When the communication network requires authentication to the mobile terminal, the mobile terminal sends the data of the authentication request to the cloud service terminal and requests an authentication result at the same time. Then the mobile terminal sends the authentication result to the communication network. The authentication process ends.

The above is only the example embodiments of the present invention and not intended to limit the protection scope of the present invention, and any changes or replacements easily obtained by those skilled in the art within the technical scope disclosed by the present invention shall fall in the protection scope of the present invention. Consequently, the protection scope of the present invention shall be based on the protection scope of the claims.

## Claims

1. A method for realizing a virtual SIM card, **characterized by** comprising:
when a mobile terminal requests to access a communication network, connecting to a cloud service terminal through a wireless network;
after the mobile terminal receives an authentication request sent by the communication network, requesting the cloud service terminal to perform authentication calculation and feeding an authentication result obtained by the authentication calculation back to the mobile terminal; and
sending, by the mobile terminal, the received authentication result to the communication network;
wherein, connecting to the cloud service terminal through the wireless network comprises: the cloud service terminal verifying the validity of the mobile terminal, wherein if the verification is passed, a normal connection is performed, otherwise, the mobile terminal is not allowed to access the cloud service terminal;
wherein, the validity verification comprises: when the mobile terminal sends a new value, obtained by calculating a preset user name and a preset password that are used when the mobile terminal connects to the cloud service terminal according to a predefined algorithm, to the cloud service terminal through the wireless network, the cloud service terminal decrypting the received new value adopting the same predefined algorithm, and comparing the user name and the password decrypted with a user name and a password prestored by the cloud service terminal corresponding to the mobile terminal, wherein if the comparison result is that the user name and the password decrypted are the same as the user name and the password prestored, the verification is passed.

2. The method according to claim 1, **characterized by** further comprising:
the communication network performing authentication according to the authentication result received from the mobile terminal, wherein if the authentication is passed, the mobile terminal is allowed to access the communication network, otherwise, the mobile terminal is not allowed to access the communication network.

3. The method according to claim 2, **characterized in that** when the authentication request sent by the communication network contains a random number, the cloud service terminal performing the authentication calculation comprises:
the mobile terminal sending the random number to the cloud service terminal, the cloud service terminal obtaining a corresponding response number by calculating the random number by an algorithm and a key prestored for the authentication, and feeding the response number back to the mobile terminal.

4. The method according to claim 3, **characterized in that** the communication network performing the authentication comprises:
when the mobile terminal sends the response number to the communication network, the communication network comparing the received response number with a prestored response number, wherein if the comparison result is the received response number is the same as the prestored response number, the authentication is passed, otherwise, access is not allowed; wherein the prestored response number corresponds to the random number in the authentication request.

5. A system for realizing a virtual SIM card, **characterized by** comprising: a mobile terminal and a cloud service terminal, wherein the mobile terminal comprises: a cloud interface component and a sending component, wherein
the cloud interface component is configured to, when accessing a communication network is requested, connect to the cloud service terminal through a wireless network, and after an authentication request sent by the communication network is received, request the cloud service terminal to perform authentication calculation;
the cloud service terminal is configured to perform the authentication calculation and feed an authentication result obtained by the authentication calculation back to the mobile terminal; and
the sending component is configured to send the authentication result received by the mobile terminal to the communication network;
wherein, when the cloud interface component connects to the cloud service terminal, the cloud service terminal is further configured to verify the validity of the mobile terminal, wherein if the verification is passed, a normal connection is performed, otherwise, the mobile terminal is not allowed to access the cloud service terminal;
wherein, the cloud service terminal is further configured to verify the validity of the mobile terminal by the following steps: when the mobile terminal sends a new value, obtained by calculating a preset user name and a preset password that are used when the mobile terminal connects to the cloud service terminal according to a predefined algorithm, to the cloud service terminal through the wireless network, the cloud service terminal decrypting the received new value adopting the same predefined algorithm, and comparing the user name and the password decrypted with a user name and a password prestored by the cloud service terminal corresponding to the mobile terminal, wherein if the comparison result is that the user name and the password decrypted are the same as the user name and the password prestored, the verification is passed.

6. The system according to claim 5, **characterized in that** the system further comprises an authentication component in the communication network, configured to perform authentication according to the authentication result received from the mobile terminal, wherein if the authentication is passed, the mobile terminal is allowed to access, otherwise, the mobile terminal is not allowed to access the communication network.

7. A mobile terminal, **characterized by** comprising:
a cloud interface component, configured to connect to a cloud service terminal through a wireless network when accessing a communication network is requested, and after an authentication request sent by the communication network is received, request the cloud service terminal to perform authentication calculation and feed back an authentication result; and
a sending component, configured to send the authentication result received from the cloud service terminal by the mobile terminal to the communication network;
wherein, when the cloud service terminal verifies the validity of the mobile terminal, the sending component is configured to obtain a new value by calculating a preset user name and a preset password that are used when the mobile terminal connects to the cloud service terminal according to a predefined algorithm, and send the new value to the cloud service terminal through the wireless network.

8. A cloud service terminal, **characterized by** comprising:
an authentication calculation component, configured to perform authentication calculation according to a request of a mobile terminal;
a sending component, configured to feed a calculated authentication result back to the mobile terminal; and
a verification component, configured to verify the validity of the mobile terminal, wherein if the verification is passed, a normal connection is performed, otherwise, the mobile terminal is not allowed to access the cloud service terminal;
wherein, the verification component is further configured to, when the cloud service terminal receives a new value obtained by calculating a preset user name and a preset password that are used during connecting to the cloud service terminal according to a predefined algorithm by the mobile terminal, decrypt the received new value adopting the same predefined algorithm, and compare the user name and the password decrypted with the user name and the password prestored by the cloud service terminal corresponding to the mobile terminal, wherein if the comparison result is that the user name and the password decrypted are the same as the user name and the password prestored, the verification is passed.

## Patentansprüche

1. Verfahren zum Ausführen einer virtuellen SIM-Karte, **dadurch gekennzeichnet, dass** es Folgendes umfasst:
wenn ein mobiles Endgerät einen Zugriff auf ein Kommunikationsnetz anfordert, Verbinden mit einem Cloud-Service-Endgerät über ein Drahtlosnetzwerk;
nachdem das mobile Endgerät eine über das Kommunikationsnetz gesendete Authentifizierungsanforderung empfangen hat, Anfordern des Cloud-Service-Endgeräts, eine Authentifizierungsberechnung durchzuführen und ein Authentifizierungsergebnis, das durch die Authentifizierungsberechnung erhalten wurde, an das mobile Endgerät zurückzugeben; und
Senden, durch das mobile Endgerät, des empfangenen Authentifizierungsergebnisses an das Kommunikationsnetz;
wobei das Verbinden mit dem Cloud-Service-Endgerät über das Drahtlosnetzwerk Folgendes umfasst: Überprüfen der Gültigkeit des mobilen Endgerätes durch das Cloud-Service-Endgerät, wobei, wenn die Überprüfung bestanden wird, eine normale Verbindung ausgeführt wird, andernfalls darf das mobile Endgerät nicht auf das Cloud-Service-Endgerät zugreifen;
wobei die Gültigkeitsüberprüfung Folgendes umfasst: wenn das mobile Endgerät einen neuen Wert über das Drahtlosnetzwerk an das Cloud-Service-Endgerät sendet, der durch Berechnen eines voreingestellten Benutzernamens und eines voreingestellten Kennworts erhalten wird, die verwendet werden, wenn sich das mobile Endgerät nach einem vorab festgelegten Algorithmus mit dem Cloud-Service-Endgerät verbindet, Entschlüsseln, duch das das Cloud-Service-Endgerät, des empfangenen neuen Wertes unter Verwendung des gleichen vorab festgelegten Algorithmus und Vergleichen des Benutzernamen und des entschlüsselten Passwortes mit einem Benutzernamen und einem Passwort, die vorab durch das Cloud-Service-Endgerät gespeichert wurden, das dem mobilen Endgerät entspricht, wobei, wenn das Vergleichsergebnis ergibt, dass der Benutzername und das entschlüsselte Passwort gleich dem Benutzernamen und dem vorab gespeicherten Passwort sind, die Überprüfung bestanden ist.

2. Verfahren nach Anspruch 1, **dadurch gekennzeichnet, dass** es ferner umfasst:
Durchführen einer Authentifizierung durch das Kommunikationsnetz nach dem von dem mobilen Endgerät empfangenen Authentifizierungsergebnis, wobei, wenn die Authentifizierung bestanden ist, dem mobilen Endgerät Zugriff auf das Kommunikationsnetz gestattet wird, andernfalls dem mobilen Endgerät kein Zugriff auf das Kommunikationsnetz gestattet wird.

3. Verfahren nach Anspruch 2, **dadurch gekennzeichnet, dass**, wenn die durch das Kommunikationsnetz gesendete Authentifizierungsanforderung eine Zufallszahl enthält, das Cloud-Service-Endgerät, das die Authentifizierungsberechnung durchführt, Folgendes umfasst:
Senden, durch das mobile Endgerät, der Zufallszahl an das Cloud-Service-Endgerät, wobei das Cloud-Service-Endgerät eine entsprechende Antwortnummer durch Berechnen der Zufallszahl mit einem Algorithmus und einem vorab für die Authentifizierung gespeicherten Schlüssel erhält, und Zurückgeben der Antwortnummer an das mobile Endgerät.

4. Verfahren nach Anspruch 3, **dadurch gekennzeichnet, dass** das Kommunikationsnetz, das die Authentifizierung durchführt, Folgendes umfasst:
wenn das mobile Endgerät die Antwortnummer an das Kommunikationsnetz sendet, das Kommunikationsnetz die empfangene Antwortnummer mit einer vorab gespeicherten Antwortnummer vergleicht, wobei, wenn das Vergleichsergebnis ergibt, dass die empfangene Antwortnummer gleich der vorab gespeicherte Antwortnummer ist, die Authentifizierung bestanden ist, anderenfalls wird der Zugang nicht gewährt; wobei die vorab gespeicherte Antwortnummer der Zufallszahl in der Authentifizierungsanfrage entspricht.

5. System zum Ausführen einer virtuellen SIM-Karte, **dadurch gekennzeichnet, dass** es Folgendes umfasst: ein mobiles Endgerät und ein Cloud-Service-Endgerät, wobei das mobile Endgerät umfasst: eine Cloud-Schnittstellenkomponente und eine Sendekomponente, wobei
die Cloud-Schnittstellenkomponente konfiguriert ist, um, wenn ein Zugriff auf ein Kommunikationsnetz angefordert wird, über ein Drahtlosnetzwerk eine Verbindung mit dem Cloud-Service-Endgerät herzustellen, und, nachdem eine durch das Kommunikationsnetz gesendete Authentifizierungsanfrage empfangen wurde, das Cloud-Service-Endgerät aufgefordert wird, eine Authentifizierungsberechnung durchzuführen;
das Cloud-Service-Endgerät konfiguriert ist, um Authentifizierungsberechnung durchzuführen und ein Authentifizierungsergebnis, das durch die Authentifizierungsberechnung erhalten wurde, zurück an das mobile Endgerät zu geben; und
die Sendekomponente konfiguriert ist, um das von dem mobilen Endgerät empfangene Authentifizierungsergebnis an das Kommunikationsnetz zu senden;
wobei, wenn die Cloud-Schnittstellenkomponente mit dem Cloud-Service-Endgerät verbunden ist, das Cloud-Service-Endgerät ferner konfiguriert ist, um die Gültigkeit des mobilen Endgeräts zu überprüfen, wobei, wenn die Überprüfung bestanden ist, eine normale Verbindung ausgeführt wird, und anderenfalls dem mobilen Endgerät kein Zugriff auf das Cloud-Service-Endgerät gewährt wird;
wobei das Cloud-Service-Endgerät ferner konfiguriert ist, um die Gültigkeit des mobilen Endgeräts durch die folgenden Schritte zu überprüfen: wenn das mobile Endgerät einen neuen Wert sendet, der durch Berechnen eines voreingestellten Benutzernamens und eines voreingestellten Passworts erhalten wird, die verwendet werden, wenn sich das mobile Endgerät nach einem vorab festgelegten Algorithmus über das Drahtlosnetzwerk mit dem Cloud-Service-Endgerät verbindet, wobei das Cloud-Service-Endgerät den empfangenen neuen Wert unter Verwendung des gleichen vorab festgelegten Algorithmus entschlüsselt und den Benutzernamen und das entschlüsselte Passwort mit einem Benutzernamen und einem Passwort vergleicht, die durch das mobile Endgerät entsprechend dem mobilen Endgerät vorab gespeichert sind, wobei, wenn das Vergleichsergebnis ergibt, dass der Benutzername und das entschlüsselte Passwort gleich dem Benutzernamen und dem vorab gespeicherten Passwort sind, die Überprüfung bestanden wird.

6. System nach Anspruch 5, **dadurch gekennzeichnet, dass** das System ferner eine Authentifizierungskomponente in dem Kommunikationsnetz umfasst, die konfiguriert ist, um eine Authentifizierung gemäß dem von dem mobilen Endgerät empfangenen Authentifizierungsergebnis durchzuführen, wenn die Authentifizierung bestanden ist, dem mobilen Endgerät Zugriff gestattet wird, anderenfalls dem mobilen Endgerät kein Zugriff auf das Kommunikationsnetz gestattet wird.

7. Mobiles Endgerät, **dadurch gekennzeichnet, dass** es Folgendes umfasst:
eine Cloud-Schnittstellenkomponente, die konfiguriert ist, um über ein Drahtlosnetzwerk mit einem Cloud-Service-Endgerät verbunden zu werden, wenn Zugriff auf ein Kommunikationsnetz angefordert wird, und, nachdem eine von dem Kommunikationsnetz gesendete Authentifizierungsanforderung empfangen wurde, das Cloud-Service-Endgerät aufgefordert wird, Authentifizierungsberechnung durchzuführen und ein Authentifizierungsergebnis zurückzugeben; und
eine Sendekomponente, die konfiguriert ist, um das Authentifizierungsergebnis, das von dem Cloud-Service-Endgerät durch das mobile Endgerät empfangen wurde, an das Kommunikationsnetz zu senden;
wobei, wenn das Cloud-Service-Endgerät die Gültigkeit des mobilen Endgeräts überprüft, die Sendekomponente konfiguriert ist, um einen neuen Wert durch Berechnen eines voreingestellten Benutzernamens und eines voreingestellten Passworts zu erhalten, die verwendet werden, wenn sich das mobile Endgerät nach einem vorab festgelegten Algorithmus mit dem Cloud-Service-Endgerät verbindet und den neuen Wert über das Drahtlosnetzwerk an das Cloud-Service-Endgerät zu senden.

8. Cloud-Service-Endgerät, **dadurch gekennzeichnet, dass** es Folgendes umfasst:
eine Authentifizierungsberechnungskomponente, die konfiguriert ist, um eine Authentifizierungsberechnung nach einer Anforderung eines mobilen Endgeräts durchzuführen;
eine Sendekomponente, die konfiguriert ist, um ein berechnetes Authentifizierungsergebnis an das mobile Endgerät zurückzugeben; und
eine Überprüfungskomponente, die konfiguriert ist, um die Gültigkeit des mobilen Endgeräts zu überprüfen, wobei, wenn die Überprüfung bestanden ist, eine normale Verbindung ausgeführt wird, anderenfalls dem mobilen Endgerät kein Zugriff auf das Cloud-Service-Endgerät gewährt wird;
wobei die Überprüfungskomponente ferner konfiguriert ist, wenn das Cloud-Service-Endgerät einen neuen Wert empfängt, der durch Berechnen eines voreingestellten Benutzernamens und eines voreingestellten Passworts erhalten wird, die während des Verbindens mit dem Cloud-Service-Endgerät gemäß einem vorab festgelegten Algorithmus durch das mobile Endgerät verwendet werden, den empfangenen neuen Wert unter Verwendung des gleichen vorab festgelegten Algorithmus zu entschlüsseln und den Benutzernamen und das entschlüsselte Passwort mit dem Benutzernamen und dem Passwort, die vorab durch das dem mobilen Endgerät entsprechenden Cloud-Service-Endgerät gespeichert wurden, zu vergleichen, wobei, wenn das Vergleichsergebnis ergibt, dass der Benutzername und das entschlüsselte Passwort gleich dem Benutzernamen und dem vorab gespeicherten Passwort sind, die Überprüfung bestanden ist.

## Revendications

1. Procédé de réalisation d'une carte SIM virtuelle, **caractérisé en ce qu'**il comprend :
lors de la requête, par un terminal mobile, d'accès à un réseau de communication, la connexion à un terminal de service en nuage via un réseau sans fil ;
après que le terminal mobile a reçu une requête d'authentification envoyée par le réseau de communication, la requête au terminal de service en nuage d'effectuer un calcul d'authentification et de renvoyer au terminal mobile un résultat d'authentification obtenu par le calcul d'authentification ; et
l'envoi par le terminal mobile du résultat d'authentification reçu au réseau de communication ;
la connexion au terminal de service en nuage via le réseau sans fil comprenant : la vérification de la validité du terminal mobile par le terminal de service en nuage et, si la vérification est réussie, une connexion normale est effectuée, sinon le terminal mobile n'est pas autorisé à accéder au terminal de service en nuage ;
la vérification de validité comprenant : lorsque le terminal mobile envoie une nouvelle valeur, obtenue en calculant un nom d'utilisateur prédéfini et un mot de passe prédéfini utilisés lorsque le terminal mobile se connecte au terminal de service en nuage selon un algorithme prédéfini, au terminal de service en nuage via le réseau sans fil, le terminal de service en nuage déchiffre la nouvelle valeur reçue en adoptant le même algorithme prédéfini et compare le nom d'utilisateur et le mot de passe déchiffrés à un nom d'utilisateur et à un mot de passe pré-enregistrés par le terminal de service en nuage correspondant au terminal mobile et, si le résultat de la comparaison est que le nom d'utilisateur et le mot de passe déchiffrés sont les mêmes que le nom d'utilisateur et le mot de passe pré-enregistrés, la vérification est réussie.

2. Procédé selon la revendication 1, **caractérisé en ce qu'**il comprend en outre :
le réseau de communication effectuant une authentification en fonction du résultat d'authentification reçu du terminal mobile et, si l'authentification est réussie, le terminal mobile est autorisé à accéder au réseau de communication, sinon le terminal mobile n'est pas autorisé à accéder au réseau de communication.

3. Procédé selon la revendication 2, **caractérisé en ce que** lorsque la requête d'authentification envoyée par le réseau de communication contient un nombre aléatoire, le terminal de service en nuage effectuant le calcul d'authentification comprend :
le terminal mobile envoie le nombre aléatoire au terminal de service en nuage, le terminal de service en nuage obtient un numéro de réponse correspondant en calculant le nombre aléatoire par un algorithme et par une clé pré-enregistrée pour l'authentification et renvoie le numéro de réponse au terminal mobile.

4. Procédé selon la revendication 3, **caractérisé en ce que** le réseau de communication effectuant l'authentification comprend :
lorsque le terminal mobile envoie le numéro de réponse au réseau de communication, le réseau de communication compare le numéro de réponse reçu à un numéro de réponse pré-enregistré, si le résultat de comparaison est que le numéro de réponse reçu est identique au numéro de réponse pré-enregistré, l'authentification est réussie, sinon l'accès n'est pas autorisé ; le numéro de réponse pré-enregistré correspondant au nombre aléatoire dans la requête d'authentification.

5. Système de réalisation d'une carte SIM virtuelle, **caractérisé en ce qu'**il comprend : un terminal mobile et un terminal de service en nuage, le terminal mobile comprenant : un composant d'interface en nuage et un composant émetteur,
le composant d'interface en nuage étant configuré pour, lorsque l'accès à un réseau de communication est demandé, se connecter au terminal de service en nuage via un réseau sans fil et, après qu'une requête d'authentification envoyée par le réseau de communication est reçue, demander au terminal de service en nuage d'effectuer un calcul d'authentification ;
le terminal de service en nuage est configuré pour effectuer le calcul d'authentification et pour renvoyer au terminal mobile un résultat d'authentification obtenu par le calcul d'authentification ; et
le composant émetteur est configuré pour envoyer le résultat d'authentification reçu par le terminal mobile au réseau de communication ;
dans lequel, lorsque le composant d'interface en nuage se connecte au terminal de service en nuage, le terminal de service en nuage est en outre configuré pour vérifier la validité du terminal mobile et, si la vérification est réussie, une connexion normale est effectuée, sinon, le terminal mobile n'est pas autorisé à accéder au terminal de service en nuage ;
le terminal de service en nuage étant en outre configuré pour vérifier la validité du terminal mobile par les étapes suivantes : lorsque le terminal mobile envoie une nouvelle valeur, obtenue en calculant un nom d'utilisateur prédéfini et un mot de passe prédéfini qui sont utilisés lorsque le terminal mobile se connecte au terminal de service en nuage selon un algorithme prédéfini, au terminal de service en nuage via le réseau sans fil, le terminal de service en nuage déchiffre la nouvelle valeur reçue en adoptant le même algorithme prédéfini et compare le nom d'utilisateur et le mot de passe déchiffrés à un nom d'utilisateur et à un mot de passe pré-enregistrés par le terminal de service en nuage correspondant au terminal mobile et, si le résultat de la comparaison est que le nom d'utilisateur et le mot de passe déchiffrés sont identiques au nom d'utilisateur et au mot de passe pré-enregistrés, la vérification est réussie.

6. Système selon la revendication 5, **caractérisé en ce que** le système comprend en outre un composant d'authentification dans le réseau de communication, configuré pour effectuer une authentification en fonction du résultat d'authentification reçu du terminal mobile et, si l'authentification est réussie, le terminal mobile est autorisé à l'accès, sinon, le terminal mobile n'est pas autorisé à accéder au réseau de communication.

7. Terminal mobile, **caractérisé en ce qu'**il comprend :
un composant d'interface en nuage, configuré pour se connecter à un terminal de service en nuage via un réseau sans fil lorsque l'accès à un réseau de communication est demandé et, après qu'une requête d'authentification envoyée par le réseau de communication est reçue, pour demander au terminal de service en nuage d'effectuer un calcul d'authentification et de renvoyer un résultat d'authentification ; et
un composant émetteur, configuré pour envoyer le résultat d'authentification reçu du terminal de service en nuage par le terminal mobile au réseau de communication ;
dans lequel, lorsque le terminal de service en nuage vérifie la validité du terminal mobile, le composant émetteur est configuré pour obtenir une nouvelle valeur en calculant un nom d'utilisateur prédéfini et un mot de passe prédéfini utilisés lorsque le terminal mobile se connecte au terminal de service en nuage selon un algorithme prédéfini et envoyer la nouvelle valeur au terminal de service en nuage via le réseau sans fil.

8. Terminal de service en nuage, **caractérisé en ce qu'**il comprend :
un composant de calcul d'authentification, configuré pour effectuer un calcul d'authentification en fonction d'une requête d'un terminal mobile ;
un composant émetteur, configuré pour renvoyer un résultat d'authentification calculé au terminal mobile ; et
un composant de vérification, configuré pour vérifier la validité du terminal mobile et, si la vérification est réussie, une connexion normale est effectuée, sinon le terminal mobile n'est pas autorisé à accéder au terminal de service en nuage ;
le composant de vérification étant en outre configuré pour, lorsque le terminal de service en nuage reçoit une nouvelle valeur obtenue en calculant un nom d'utilisateur prédéfini et un mot de passe prédéfini utilisés lors de la connexion au terminal de service en nuage selon un algorithme prédéfini par le terminal mobile, déchiffrer la nouvelle valeur reçue en adoptant le même algorithme prédéfini et comparer le nom d'utilisateur et le mot de passe déchiffrés au nom d'utilisateur et au mot de passe pré-enregistrés par le terminal de service en nuage correspondant au terminal mobile ; et si le résultat de la comparaison est que le nom d'utilisateur et le mot de passe déchiffrés sont identiques au nom d'utilisateur et au mot de passe pré-enregistrés, la vérification est réussie.
